# FASCICULE DE BREVET EUROPEEN

(11) **EP 3 999 328 B1**
(45) Date de publication et mention de la délivrance du brevet: **24.12.2025**
(21) Numéro de dépôt: 20743643.7
(22) Date de dépôt: 16.07.2020
(51) Int. Cl.: B29D 35/00, A43B 23/02, A43D 3/02

(54) **PROCÉDÉ DE FABRICATION D'UN ARTICLE CHAUSSANT**
VERFAHREN ZUR HERSTELLUNG EINES SCHUHWERKES
METHOD OF MANUFACTURING AN ARTICLE OF FOOTWEAR

(30) Priorité: 17.07.2019 FR 1908052
(43) Date de publication de la demande: 25.05.2022
(73) Titulaire: Decathlon, 59650 Villeneuve d'Ascq (FR)
(72) Inventeur: TATIBOUET, Carly, 59650 Villeneuve d'Ascq (FR); MAGNARD, Anne-Claire, 59650 Villeneuve d'Ascq (FR); HUANG, Jarvis, 59650 Villeneuve d'Ascq (FR); LEE, Terry, 59650 Villeneuve d'Ascq (FR)
(74) Mandataire: Cabinet Beau de Loménie
(86) Numéro de dépôt international: PCT/EP2020/070232
(87) Numéro de publication internationale: WO 2021/009327

(56) Documents cités:
- WO-A1-2014/081680
- WO-A2-2011/049306
- US-A1- 2018 352 905
- US-A1- 2019 098 961

## Description

### Domaine Technique

La présente invention a pour objet un procédé de fabrication d'un article chaussant, en particulier pour la pratique d'un sport.

La présente invention a pour objet un procédé de fabrication d'un article chaussant, en particulier de la tige dudit article chaussant, mettant en œuvre un ou plusieurs composant(s) tricoté(s) tubulaire(s) en trois dimensions pour la réalisation d'une tige comprenant une partie de semelle intégrée. Document US 2018/352905 A1 se rapporte à un procédé de fabrication d'un article chaussant comprenant une première partie tubulaire tissée.

### Technique antérieure

Les articles chaussant de l'état de la technique incluent généralement deux éléments principaux à savoir une tige et une structure de semelle. La tige est sécurisée à la structure de semelle et forme un vide ou volume d'accueil du pied à l'intérieur de l'article chaussant pour recevoir de manière sécurisée et confortable le pied. La structure de semelle est sécurisée à la zone inférieure de la tige, et est ainsi positionnée entre la tige et le sol.

Dans les articles chaussant, par exemple, pour la pratique d'un sport, la structure de semelle peut inclure une semelle intermédiaire et une semelle d'usure dont la face externe est destinée à venir en contact directement avec le sol.

La semelle intermédiaire comprend généralement un matériau en mousse polymère qui atténue les réactions d'impacts avec le sol pour diminuer les forces de retour d'impact générées sur le pied et la jambe durant la marche, la course, ou d'autres activités lors du port de l'article chaussant.

De manière additionnelle, la semelle intermédiaire peut comprendre une ou des chambre(s) remplie(s) d'un fluide, une ou des pièce(s) amortissante(s) ou d'autres éléments qui permettent d'atténuer les forces de retour d'impact et d'améliorer la stabilité ou encore d'influencer les mouvements du pied et donc la proprioception.

La semelle d'usure est sécurisée à la surface inférieure de la semelle intermédiaire et fournit une portion d'engagement du sol de la structure de semelle, laquelle portion d'engagement du sol est formée dans un matériau résistant à l'usure et durable, tel que par exemple un matériau à base de caoutchouc ou d'un élastomère synthétique. La structure de semelle peut également comprendre une doublure intérieure positionnée à l'intérieur du volume d'accueil du pied de la tige et à proximité de la surface inférieure du pied pour améliorer le confort de l'article chaussant.

La tige comprend généralement de nombreuses pièces, comme un quartier latéral, un quartier médial, un embout de protection avant, une languette, un talon, un contrefort arrière, une empeigne, un dispositif de serrage avec notamment des passants/(œillets de passage d'un lacet) et un lacet, une doublure interne et éventuellement encore d'autres pièces. Certaines de ces pièces peuvent être en plusieurs parties. La fabrication d'une chaussure nécessite ainsi d'assembler ces différentes pièces afin de former une tige en trois dimensions en découpant ces pièces et en les assemblant à plat.

La tige s'étend généralement au-dessus du coup du pied et dans les zones des orteils du pied, le long des cotés latéral et médial du pied, et autour de la zone de cheville du pied.

Selon certaines applications telles que par exemple pour le basket-ball, ou encore la randonnée, la tige peut s'étendre vers le haut et autour de la cheville pour apporter un support et une protection supplémentaire à la cheville. Le dispositif de serrage est souvent incorporé dans la tige pour ajuster la taille de la tige et ainsi permettre l'entrée et le retrait du pied du vide formé à l'intérieur de la tige. La tige peut également comprendre une languette qui s'étend sous le dispositif de serrage, par exemple le système de laçage, pour ajuster l'article chaussant, et la tige peut comprendre un élément de renfort arrière pour limiter les mouvements du talon. L'assemblage de ces différents composants/éléments /pièces nécessite beaucoup de temps et peut mener à des erreurs dans la fabrication de l'article chaussant. Le nombre potentiel d'erreurs peut être ainsi significatif et complexifier le procédé de fabrication et donc le rendre également plus coûteux.

La tige mise en forme, et donc en volume, notamment par assemblage au niveau du talon, par exemple à l'aide d'une couture, est associée de manière connue à un élément de semelle, notamment entrant dans une structure de semelle, pour délimiter un volume chaussant.

La tige peut ainsi être collée sur l'élément de semelle par une couche de colle ; elle peut être collée à une première de montage qui est relativement rigide.

Alternativement, la tige peut être assemblée à l'élément de semelle en mettant en forme la tige à l'aide de différentes coutures puis en assemblant la tige à la première de montage par couture selon la technique dite stroebel. La première de montage est dans ce cas généralement souple afin de pouvoir être cousue. La première de montage forme ainsi la partie de semelle ou fond de la tige.

Le temps et les coûts associés au transport, au stockage, à la découpe et à l'assemblage des différents composants sont très importants. De plus, lors de la découpe et de l'assemblage des composants, de nombreux déchets sont générés. Les articles chaussants avec un grand nombre de composants dans des matériaux différents sont plus difficiles à recycler car il est notamment complexe de séparer les composants pour leur recyclage. Ainsi, en diminuant le nombre de composants différents entrant dans la composition d'une chaussure il est possible de diminuer la quantité de déchets et d'améliorer l'efficacité du procédé de fabrication de tels articles chaussants et le caractère recyclable des tiges.

Il a ainsi été proposé de réaliser des articles chaussants mettant en œuvre une tige obtenue à partir de la fabrication d'un tube tricoté en trois dimensions. Ces procédés mettent en œuvre tout d'abord le tricotage de la tige primaire par tricotage d'un composant tricoté tubulaire en forme sensiblement de chaussette.

Le procédé comprend ensuite la réalisation d'une découpe longitudinale dans la partie de semelle du composant tubulaire tricoté, puis la disposition à plat de ce composant tubulaire tricoté à l'aide de la découpe longitudinale en sorte de faire apparaitre une face externe sur laquelle un ou des composant(s) fonctionnel(s) peuvent être disposés à plat. Ces composants fonctionnels tels un logo, des éléments de renforts, des œillets de laçage, un bout dur ou encore une empeigne ou encore un renfort de talon, sont appliqués manuellement sur la face externe à plat du composant tubulaire tricoté puis solidarisés, par exemple par collage et/ou couture. La solidarisation par collage peut être effectuée par exemple manuellement à l'aide d'un fer. La découpe longitudinale pratiquée dans la partie de semelle est ensuite fermée par exemple à l'aide d'une couture. On obtient alors un ensemble chaussant comprenant la tige primaire solidarisée avec un ou des composant(s) fonctionnel(s). Cet ensemble chaussant est placé sur une préforme à la forme d'un pied, puis est thermoformé à la forme du pied de la préforme pour former la tige finale. Les dimensions de la préforme correspondant à une taille de pied donnée, de nombreuses préformes sont nécessaires. Les préformes sont en plastique ou en matériau(x) composite(s). Enfin, un élément de semelle tel qu'une semelle intermédiaire est solidarisée à la partie de semelle de la tige.

La réalisation d'une découpe longitudinale dans la partie de semelle du composant tubulaire tricoté afin de disposer ce dernier à plat et pouvoir réaliser sa fonctionnalisation nécessite des étapes supplémentaires. Par ailleurs, le fait de solidariser des composants fonctionnel(s) sur un tube tricoté disposé dans un plan, ne permet de fonctionnaliser que des zones peu étendues du composant tubulaire tricoté. Il n'est pas possible de disposer à plat l'intégralité du tube tricoté, malgré l'ouverture longitudinale. Il n'est pas possible ainsi de fonctionnaliser l'ensemble de la surface de la tige en trois dimensions. De plus, les composants fonctionnels ajoutés lors de la fonctionnalisation à plat, peuvent être endommagés thermiquement lors de l'étape suivante de thermoformage de telle sorte que cela limite encore la taille et/ou la nature des composants fonctionnels qui peuvent être utilisés.

Il existe donc un besoin pour un procédé de fabrication d'un article chaussant permettant d'accéder à la totalité de l'ensemble chaussant en trois dimensions -destiné à former la tige-lors de sa fonctionnalisation, sans limitation dans la taille et le nombre des zones de fonctionnalisation accessibles.

Il existe encore un besoin pour un procédé de fabrication d'un article chaussant limitant le nombre d'étapes d'assemblage mais ne dégradant pas le ou les composant(s) fonctionnel(s) mis en œuvre.

Il existe également un besoin pour un procédé de fabrication permettant de réduire le temps de fabrication, et d'améliorer la qualité de la tige obtenue.

### Exposé de l'invention

La présente invention a pour objet un procédé de fabrication d'un article chaussant, limitant le nombre de composants et/ou pièces, permettant ainsi de diminuer significativement le temps de fabrication, le nombre d'étapes de fabrication, limitant les erreurs d'assemblage, minimisant la quantité de déchets, et améliorant la qualité de la tige obtenue en termes d'aspect, et de propriétés mécaniques.

La présente invention a également pour objet un procédé offrant davantage de possibilités dans la conception esthétique de la tige, et permettant d'améliorer la stabilisation de la tige. La présente invention a ainsi pour objet un procédé de fabrication d'un article chaussant, palliant les problèmes précités, en ce qu'il comprend les étapes:
(i)- fournir une première partie tubulaire tricotée comprenant au moins une portion thermofusible et un ou plusieurs composant(s) fonctionnel(s);
(ii)- former un ensemble chaussant comprenant la première partie tubulaire tricoté, et un ou plusieurs composant(s) fonctionnel(s);
(iii)- transformer l'ensemble chaussant, placé au préalable contre la surface extérieure d'une préforme à la forme d'un pied, en une tige, l'étape de transformation comprend le thermoformage de l'ensemble chaussant selon la forme de pied de la préforme, et la préforme comprend un volume intérieur et des perforations débouchant sur sa surface extérieure, ledit volume intérieur et les perforations sont en liaison fluidique.

Avantageusement, l'agencement des perforations de la préforme permet de répartir de manière plus régulière la chaleur sur la surface extérieure de la préforme, et ainsi d'obtenir une tige thermoformée ayant une forme plus régulière, et de renforcer la solidarisation lorsque la ou les portion(s) thermofusible(s) est/sont utilisée(s) pour solidariser, un ou des composant(s) fonctionnel(s) avec la première et/ou la seconde partie(s) tubulaire(s) tricotée(s), et/ou, les première et seconde parties tubulaires tricotées entre-elles.

La préforme comprend une partie de semelle (destinée à venir en contact avec la partie de semelle de l'enveloppe définie ci-après), une partie latérale (destinée à venir en contact avec le côté latéral de l'enveloppe définie ci-après), une partie médiale (destinée à venir en contact avec le côté médial de l'enveloppe définie ci-après), une partie avant dans le prolongement des parties médiale, latérale et de semelle (destinée à recouvrir l'avant du pied de l'enveloppe définie ci-après), et une partie arrière dans le prolongement des parties médiale, latérale et de semelle (destinée à recouvrir l'arrière du pied, et donc le talon, et éventuellement la cheville de l'enveloppe définie ci-après).

Dans un mode de réalisation, préféré, la préforme comprend des perforations dans au moins l'une des parties précitées, en particulier dans chacune des parties précitées.

De préférence, la préforme comprend des perforations réparties sur l'intégralité de la surface extérieure de la préforme, notamment destinée à venir en contact avec l'ensemble chaussant. De préférence, la préforme est creuse et comprend un volume intérieur, et les perforations sont des ouvertures traversantes débouchant sur la surface extérieure de la préforme, et sur le volume intérieur, notamment sur la surface intérieure de la préforme.

De préférence, les perforations comprennent des perforations sensiblement circulaires.

Dans un mode de réalisation, préféré, les perforations comprennent (ou sont constituées) des perforations dont la plus grande dimension est circonscrite dans un cercle dont le diamètre est supérieure à 1 mm, encore de préférence supérieur ou égal à 3 mm, préférentiellement supérieur ou égal à 6 mm, notamment inférieur ou égal à 20 mm, en particulier inférieur ou égal à 10 mm.

Dans un mode de réalisation, le rapport de la somme des surfaces (cm²) des perforations sur la surface totale de la surface extérieure (cm²) de la préforme est inférieur ou égal à 60%, de préférence inférieur ou égal à 40%, encore de préférence inférieur ou égal à 25%, notamment supérieur ou égal à 10%.

La chaleur circule en effet à travers l'ensemble chaussant mais également à travers les perforations de la préforme vers son volume intérieur, et inversement de son volume intérieur, à travers les perforations vers l'ensemble chaussant.

Par définition, le thermoformage implique l'application de chaleur à l'ensemble chaussant, et ce pendant une durée et à une température suffisantes pour obtenir le thermoformage de l'ensemble chaussant à la forme de pied de la préforme. De préférence, la température appliquée est supérieure ou égale à la ou les température(s) de fusion et/ou de ramollissement de la ou des portion(s) thermofusible(s) de la première partie tubulaire tricotée et/ou de la seconde partie tubulaire tricotée.

L'étape de transformation (iii) permet par apport de chaleur de faire fusionner/ramollir la ou les portion(s) thermofusible(s), l'ensemble chaussant est également comprimé et plaqué contre la surface extérieure de la préforme. Suite au refroidissement de l'ensemble chaussant, notamment à la température ambiante, maintenu en pression contre la surface extérieure de la préforme, l'ensemble chaussant conserve alors définitivement la forme de pied de la préforme. La fusion ou le ramollissement, puis le refroidissement, d'une ou plusieurs portions thermofusible(s) permet d'impartir à l'ensemble chaussant la forme de pied de la préforme, et éventuellement de solidariser le ou les composant(s) fonctionnel(s) à la première partie tubulaire.

La durée de l'étape (iii), en particulier du thermoformage, peut être supérieure à 0 seconde, et inférieure ou égale à 30 minutes, en particulier inférieure ou égale à 5 minutes.

Dans un premier mode de réalisation, le ou les composant(s) fonctionnel(s) peut/peuvent être solidarisé(s) avec la première partie tubulaire et/ou la seconde partie tubulaire (définie ci-après) lors de l'étape (iii), de manière simultanée lors du thermoformage de l'ensemble chaussant. Le thermoformage et la solidarisation se déroulent alors de manière concomitante, en une seule étape, en combinaison avec une mise sous vide de l'ensemble chaussant, et éventuellement l'application de vapeur d'eau à l'ensemble chaussant. Dans ce cas, de préférence, le ou les composant(s) fonctionnel(s) est/sont disposé(s) sur la première partie tubulaire tricotée disposée en trois dimensions selon la forme d'un pied, en particulier disposée sur une préforme à la forme d'un pied, notamment la préforme utilisée lors de l'étape de transformation (iii). Cette disposition offre davantage de possibilité pour personnaliser et stabiliser la première partie tubulaire tricotée, notamment car la totalité de ses surfaces extérieure et intérieure sont totalement disponibles pour la fonctionnalisation.

Lors de l'étape (ii), le ou les composant(s) fonctionnel(s) peut/peuvent être maintenu(s) disposé(s) sur la première partie tubulaire tricotée et/ou la seconde partie tubulaire tricotée par couture et/ou collage et/ou par une soudure notamment thermique, en particulier par ultrasons, par exemple à l'aide d'un ou plusieurs point(s) de maintien ; notamment par un ou plusieurs point(s) de couture et/ou un ou plusieurs point(s) de colle et/ou un ou plusieurs point(s) de soudure, par exemple de soudure par ultrasons. Cette disposition permet de maintenir le ou les composant(s) de fonctionnalisation dans son ou ses emplacement(s) de fonctionnalisation.

Dans un second mode de réalisation, le ou les composant(s) fonctionnel(s) peut/peuvent être solidarisé(s) avec la première partie tubulaire et/ou la seconde partie tubulaire (définie ci-après) avant l'étape (iii), par couture ou collage. L'étape (ii) comprend alors la disposition à plat de la première partie tubulaire tricotée, par l'intermédiaire d'une ouverture longitudinale ménagée dans la partie de semelle de la première partie tubulaire tricotée, pour sa fonctionnalisation à l'aide de(s) composant(s) fonctionnel(s). De préférence, l'étape de transformation (iii) suivante comprend l'application de chaleur combinée avec une pression appliquée à l'ensemble chaussant pour le plaquer contre la surface extérieure de la préforme, et de manière préférée comprend également l'application de vapeur d'eau à l'ensemble chaussant. En particulier, l'étape de transformation (iii) ne comprend pas dans ce cas la mise sous vide de l'ensemble chaussant.

Dans un mode de réalisation, l'étape (iii) comprend la disposition de l'ensemble chaussant au préalable disposé sur la préforme en forme de pied dans un volume de moulage. Ledit volume de moulage est de préférence délimité par un moule comprenant une ou plusieurs parties, en particulier deux parties.

Le volume de moulage a une forme sensiblement de pied complémentaire de celle de la préforme.

Le volume de moulage peut être formé entre la surface extérieure de la préforme en forme de pied, et la surface intérieure d'un contre-moule (notamment rigide, par exemple en plusieurs parties) ou la surface intérieure d'une membrane flexible venant épouser la préforme (recouverte de l'ensemble chaussant).

La membrane flexible peut être dans un matériau flexible et déformable, par exemple en silicone ou en polyuréthane. La membrane est par définition étanche à l'air.

Le ou les composant(s) fonctionnel(s) peut/peuvent être solidarisé(s) par l'intermédiaire de la ou des portion(s) thermofusible(s) que comprend/comprennent la première partie tubulaire tricotée et/ou la seconde partie tubulaire tricotée (définie ci-après), et/ou la ou les portion(s) thermofusible(s) que comprend/comprennent le ou les composant(s) fonctionnel(s) lui/eux-même(s), et/ou un ou des moyen(s) adhésif(s), notamment au moins en partie thermofusible(s). Dans ce dernier cas, le ou les moyen(s) adhésif(s) est/sont considéré(s) comme équivalent(s) à un ou des composant(s) fonctionnel(s) selon l'invention ayant une fonction de solidarisation intermédiaire.

Le ou les composant(s) fonctionnel(s) selon l'invention a/ont au moins une fonction choisie parmi les fonctions suivantes : amorti, renfort, adhésion, revêtement de protection continu ou discontinu, esthétique, ou une combinaison de ces dernières.

La première partie tubulaire tricotée, et/ou la seconde partie tubulaire tricotée (définie ci-après) peut/peuvent être tricotée(s) sur un métier à tricoter rectiligne double fonture, ou sur un métier à tricoter circulaire.

De préférence, la première partie tubulaire tricotée et/ou la seconde partie tubulaire tricotée est / sont chacun(e), une enveloppe comprenant une partie de semelle (destinée à venir sous le pied du porteur), une partie latérale (destinée à venir en contact avec le côté latéral du pied du porteur), une partie médiale (destinée à venir en contact avec le côté médial du pied du porteur), une partie avant dans le prolongement des parties médiale, latérale et de semelle (destinée à recouvrir l'avant du pied), et une partie arrière dans le prolongement des parties médiale, latérale et de semelle (destinée à recouvrir l'arrière du pied, et donc le talon, et éventuellement la cheville). L'enveloppe peut être agencée en sorte de recouvrir tout ou partie de la cheville et éventuellement s'étendre au-dessus de la malléole.

La partie avant de l'enveloppe peut comprendre une languette et une poche distale destinée à recevoir les orteils. La languette peut être solidaire de la partie avant uniquement selon son bord avant ou solidaire de la partie avant, en sus de son bord avant, selon ses bords latéral et médial respectivement aux parties latérale et médiale.

La partie arrière peut comprendre une poche configurée pour recevoir le talon.

L'enveloppe délimite de préférence un volume ou vide destiné à accueillir le pied du porteur. Dans un mode de réalisation, la première partie tubulaire tricotée est de construction tricotée unitaire avec l'enveloppe tricotée en sorte que l'enveloppe et la première partie tubulaire tricotée comprennent une pièce tricotée unique.

Dans un mode de réalisation, la seconde partie tubulaire tricotée est de construction tricotée unitaire avec l'enveloppe tricotée en sorte que l'enveloppe et la seconde partie tubulaire tricotée sont dans une seule pièce tricotée. Dans ce cas, la pièce tricotée formant la seconde partie tubulaire tricotée et la pièce tricotée formant la première partie tubulaire tricotée sont solidarisées l'une à l'autre, notamment lors de l'étape (iii) de transformation.

Dans un autre mode de réalisation, la première partie tubulaire tricotée et la seconde partie tubulaire tricotée sont chacune dans une enveloppe, les deux enveloppes étant de construction tricotée unitaire avec leurs première et seconde parties tubulaires tricotées respectives, et entre-elles, en sorte de comprendre une pièce tricotée unique.

La première partie tubulaire tricotée et/ou la seconde partie tubulaire tricotée comprend/comprennent un ou plusieurs fils, notamment assemblés mécaniquement par tricotage.

Le ou les fils peut/peuvent être sélectionné(s), indépendamment, parmi : un ou des fils monofilamentaire(s), un ou des fil(s) filés de fibres, un ou des fil(s) multifilamentaire, et une combinaison de ces derniers.

Le ou les fil(s) peut/peuvent être des fils non thermofusible(s), au moins partiellement thermofusible(s) ou totalement thermofusible(s), ou un mélange de ces derniers.

Ainsi, la première partie tubulaire tricotée et/ou la seconde partie tubulaire tricotée comprend/comprennent (chacune) un ou des fil(s) au moins en partie thermofusible(s), et/ou un ou des fil(s) non thermofusible(s).

On comprend dans la présente par tout matériau, fil, portion, premier composant, ou équivalent, thermofusible, que ce dernier est configuré pour être fondu ou à tout le moins suffisamment ramolli lors de l'étape de transformation (iii) afin de permettre le thermoformage de l'ensemble chaussant, et éventuellement la solidarisation avec un ou des composant(s) fonctionnels et/ou la solidarisation des première et seconde partie(s) tubulaire(s) entre-elles. L'ensemble chaussant peut ainsi comprendre un ou plusieurs matériau(x) fusible(s) par nature par application de chaleur mais qui ne seront pas activé(s) lors de l'étape (iii). Ce(s) matériau(x) est/sont considéré(s) dans le présent texte comme étant non thermofusible(s). Les fils thermo fusibles, notamment au moins partiellement, peuvent être des fils comprenant au moins deux composants, notamment du type bi-composants, un premier composant ayant une température de fusion inférieure ou égale à la ou les température(s) de chauffage mise(s) en œuvre lors de l'étape (iii), et un second composant ayant une température de fusion ou de dégradation donnée supérieure à la ou les température(s) de chauffage mise(s) en œuvre lors de l'étape (iii).

Les fils thermo fusibles peuvent être des fils mono composant dont la température de fusion est inférieure ou égale à la ou les température(s) de chauffage mise(s) en œuvre lors de l'étape (iii).

Le premier composant peut être choisi parmi les polyuréthanes, notamment les polyuréthanes thermoplastiques ; les polyamides, tels que le polyamide 6 ou 66 ; les polyoléfines, tels que le polypropylène (PP) ou le polyéthylène (PE) ; de préférence parmi les polyuréthanes.

Le second composant peut être choisi parmi les polyoléfines, tels que le polyéthylène haute densité ; les polyamides, tels que le polyamide 4-6, le polyamide 6 ou 6-6 ; les polyesters, tel que le polyéthylène téréphtalate.

Le premier composant et/ou le second composant peut/peuvent être coloré(s) ou incolore(s) et/ou opaque(s) ou transparent(s).

Les fils bi composants peuvent être du type cœur-manteau, le cœur étant formé du second composant et le manteau étant formé du premier composant.

De préférence, le ou les composant(s) thermofusible(s) ont une température de fusion ou de ramollissement inférieur(s) ou égale(s) à la ou les température(s) de chauffage.

Le ou les fils, en particulier non thermofusible(s), peut/peuvent comprendre un ou plusieurs matériau(x) choisi(s), indépendamment, parmi les matériaux synthétiques, artificiels (par exemple le lyocell ou la viscose), naturels, minéraux ou inorganiques, et une combinaison de ces derniers, de préférence parmi les matériaux synthétiques, artificiels et naturels, notamment synthétiques.

Le ou les matériau(x) synthétiques comprennent de préférence : les polyesters, notamment le polyéthylène téréphtalate (PET) et le polybutylène téréphtalate (PBT) ; les polyamides (tels que le PA 6, le PA 6-6, le PA 12, le PA 4-6) ; les polyoléfines (le polypropylène, le polyéthylène, le PEEK, le PEUHMW) ; les aramides, notamment le méta-aramide ou le para-aramide ou un mélange de ces derniers ; les acétates de vinyle (par exemple l'EVA), les polyacryliques (par exemple le polyacrylonitrile) ; les élastomères ; les élasthannes, ou un mélange de ces derniers, de préférence il s'agit des polyesters et des polyoléfines.

Le ou les matériau(x) naturelle(s) comprennent de préférence : le coton, la viscose, le lin, le sisal, la laine, la jute, la soie, le chanvre.

Le ou les matériau(x) minéral(aux) ou inorganique(s) comprennent de préférence: le carbone, des fibres minérales, telle que la fibre de roche, le verre.

Les fils mono filamentaires ont de préférence un diamètre supérieur à 0,01 mm et inférieur ou égal à 5 mm, encore de préférence supérieur ou égal à 0,1 mm et inférieur ou égal à 2 mm. Les fils multi filamentaires et/ou fils filés de fibres ont de préférence un titre supérieur ou égal à 10 dtex et inférieur ou égal à 1 000 dtex, encore de préférence supérieur ou égal à 30 dtex et inférieur ou égal à 500 dtex.

Les fils multi filamentaires peuvent être des fils texturés FDY (Full Drawn Yarn), DTY (Draw Textured Yarn) ou encore POY (Partially Oriented Yarn), ou un mélange de ces derniers.

Le ou les première et seconde partie(s) tubulaire(s) tricotée(s) peut/peuvent également comprendre un ou plusieurs fil(s) élastique(s), notamment en élasthanne.

On comprend dans le présent texte par « longitudinal(e) », la direction s'étendant sur une longueur ou un axe majeur de l'article chaussant ou tige. Dans certains cas, la direction longitudinale peut s'étendre d'une région d'avant pied vers une région d'arrière pied de l'article chaussant ou de la tige.

On comprend dans le présent texte par « latéral(e) », la direction s'étendant sur une largeur ou un axe minoritaire de l'article chaussant ou de la tige. La direction latérale peut ainsi s'étendre entre le côté médiale et le côté latérale de l'article chaussant.

On comprend dans le présent texte par « vertical(e) », la direction s'étendant de manière généralement perpendiculaire à la direction latérale et à la direction longitudinale.

Dans une variante, un flux de gaz(s), notamment de la vapeur d'eau, est envoyé(e) sur l'ensemble chaussant à travers les perforations de la préforme.

Cette disposition permet d'améliorer davantage les qualités esthétiques et mécaniques de la tige par la distribution homogène de chaleur et d'un flux de gaz(s), notamment de vapeur d'eau, combinées sur l'ensemble chaussant. La tige obtenue a une forme encore plus régulière, et donc un meilleur aspect, et ses propriétés mécaniques sont améliorées (par exemple meilleur reproductibilité de la résistance à la déchirure, de l'allongement à rupture, meilleur résistance au pelage). La tige obtenue présente également un toucher amélioré, en particulier un toucher plus souple. Enfin, la solidarisation, telle qu'évoquée ci-avant par la fusion de portion(s) thermofusible(s), est encore renforcée.

Une explication, non exhaustive de ces effets techniques, et non limitative de la présente invention, serait que la vapeur d'eau agirait tel un plastifiant sur les éléments textiles et/ou polymériques que l'ensemble chaussant comprend, en particulier les première et/ou seconde partie(s) tubulaire(s) tricotée(s).

Dans une variante, la surface extérieure de la préforme comprend au moins un métal.

Dans une variante, la surface extérieure de la préforme comprend au moins un alliage métallique, en particulier un alliage ferreux ou non ferreux.

Les deux dispositions précédentes permettent de réduire considérablement la durée de l'étape (iii) car le dit moins un métal ou le ou les alliage(s) métallique(s), a/ont une meilleur conductivité thermique que les préformes en plastique ou composites de l'état de la technique. On comprend par métal dans le présent, tout métal considéré comme appartenant à la famille des métaux répertoriés dans la classification périodique des éléments de Mendeleïev.

A titre d'exemple, il a été observé une réduction du temps de thermoformage par deux avec l'utilisation de la préforme selon l'invention, en passant de 80 secondes à moins de 40 secondes.

En particulier, l'intégralité de la surface extérieure de la préforme comprend au moins un métal ou un alliage métallique.

Dans un mode de réalisation, la préforme, en entier, est dans au moins un métal ou un alliage métallique, ou éventuellement dans un matériau vitrocéramique.

Ledit au moins un métal ou alliage métallique est de préférence choisi parmi : l'aluminium, le fer, l'acier inoxydable, ou une combinaison de ces derniers.

Dans une variante, la surface extérieure de la préforme comprend un matériau vitrocéramique, en particulier la surface extérieure de la préforme est constituée d'un matériau vitrocéramique. Dans une variante, la préforme, en particulier sa surface extérieure, subit un traitement de surface physique et/ou chimique.

Cette disposition permet de conférer à la préforme une ou des propriété(s) thermique(s) et/ou mécanique(s) additionnelle(s), notamment pour améliorer des propriétés de résistance à la corrosion, à l'usure ou au choc optimisant l'utilisation de la préforme.

Dans une variante, lors de l'étape (iii) de transformation, on applique, en une seule étape, à l'ensemble chaussant, de la chaleur et/ou un flux de gaz(s), notamment de la vapeur d'eau, et/ou une mise sous vide.

De préférence, la ou les température(s) de chauffage appliquée(s) à l'ensemble chaussant lors de l'étape de transformation (iii) est/sont supérieure(s) ou égale(s) à 80°C, encore de préférence supérieure(s) ou égale(s) à 90°C, préférentiellement supérieure(s) ou égale(s) à 100°C.

De préférence, la ou les température(s) de chauffage appliquée(s) à l'ensemble chaussant lors de l'étape de transformation (iii) est/sont inférieure(s) ou égale(s) à 250°C, encore de préférence inférieure(s) ou égale(s) à 200°C, préférentiellement inférieure(s) ou égale(s) à 180°C.

De préférence, le ou les composant(s) thermofusible(s) ont une température de fusion ou de ramollissement inférieur(s) ou égale(s) à la ou les température(s) de chauffage.

Dans une variante, le procédé comprend la fourniture d'une seconde partie tubulaire tricotée, comprenant éventuellement au moins une portion thermofusible, et l'ensemble chaussant à l'étape (ii) comprend les première et seconde parties tubulaires tricotées, au moins en partie, superposées, en liaison avec un ou plusieurs composant(s) fonctionnel(s).

La disposition d'une seconde partie tubulaire tricotée permet de renforcer la tige, et d'apporter davantage de fonctionnalisation et de stabilisation à la tige.

La première partie tubulaire tricotée peut être identique ou différente de la seconde partie tubulaire tricotée.

Dans une variante, l'étape de transformation (iii) comprend la solidarisation, au moins partielle, d'une part, du ou des composant(s) fonctionnel(s), à au moins l'une, de la première partie tubulaire tricotée et de la seconde partie tubulaire tricotée, et d'autre part, des première et seconde parties tubulaires tricotées entre-elles, le thermoformage et la solidarisation ont lieu en une seule étape.

Avantageusement, le thermoformage et la solidarisation ont lieu simultanément en une seule étape.

Dans une variante, un composant fonctionnel, choisi parmi le ou les composant(s) fonctionnel(s), est un film comprenant au moins un matériau thermofusible.

Le film peut être dans un ou plusieurs matériau(x) choisi(s) parmi les matériaux synthétiques cités ci-avant, et le polyuréthane, ou une combinaison de ces derniers.

Dans un mode de réalisation, le film comprend/est constitué de polyuréthane.

Dans une variante, après l'étape (iii), ledit film forme un revêtement (ou a des dimensions déterminées en sorte de former un revêtement) recouvrant au moins 10%, de préférence au moins 25%, encore de préférence au moins 40%, préférentiellement au moins 50%, encore plus préférentiellement au moins 70%, notamment au moins 80%, ou 98% à +/- 2% près, de la surface extérieure de la tige (ou de la première ou seconde partie tubulaire tricotée), notamment à l'exception de la surface extérieure de la partie de semelle de la tige (ou encore de la première ou seconde partie tubulaire tricotée).

Le revêtement peut être continu ou discontinu, et/ou sous forme de motif(s) (identique(s) ou différent(s)) et/ou de point(s), mais couvrant globalement le % de surface extérieure précitée). De préférence, cette disposition est obtenue en combinant lors de l'étape (iii), de la chaleur, un flux de gaz(s), notamment de la vapeur d'eau, et une mise sous vide, appliquées à l'ensemble chaussant.

Dans une variante, au moins un composant fonctionnel, parmi le ou les composant(s) fonctionnel(s), est choisi parmi : un film polymérique comprenant au moins un matériau thermofusible, un élément de fonctionnalisation textile, une empeigne, un élément de renfort de talon, un logo, un élément esthétique, un bout dur, un élément de renfort d'une zone de laçage, notamment d'une zone comprenant des œillets de laçage, un élément amortissant tel qu'une mousse, une partie tubulaire tricotée auxiliaire, ou une combinaison de ces derniers. Dans un mode de réalisation, l'un au moins du ou des composant(s) fonctionnel(s) est un élément amortissant, notamment une mousse.

Dans un mode de réalisation, l'un au moins du ou des composant(s) fonctionnel(s) est choisi parmi : un film polymérique au moins en partie thermofusible, une empeigne, un élément de renfort de talon, un logo, un élément esthétique, un bout dur, un élément de renfort d'une zone de laçage, ou une combinaison de ces derniers.

L'élément textile peut comprendre un ou plusieurs élément(s) tissé(s), tricoté(s), nontissé(s) ou une combinaison de ces derniers.

La partie tubulaire tricotée auxiliaire peut être identique ou différente de la première partie tubulaire tricotée. La description relative à la première ou seconde partie tubulaire s'applique à la partie tubulaire auxiliaire.

Dans une variante, le procédé comprend la fourniture d'un composant tubulaire tricotée, et la première partie tubulaire tricotée et la seconde partie tubulaire tricotée sont de construction tricotée unitaire avec le composant tubulaire tricotée en sorte de former un élément en une pièce tricotée.

Avantageusement, le composant tubulaire tricoté comprend dans sa structure tricotée la première partie tubulaire tricotée et la seconde partie tubulaire tricotée en sorte de former une seule et même pièce tricotée.

Dans une variante, le procédé comprend une étape de disposition d'au moins un composant fonctionnel entre la première partie tubulaire tricotée et la seconde partie tubulaire tricotée.

Avantageusement, ce composant fonctionnel est pris en sandwich entre les première et seconde parties tubulaires tricotées. Ce composant fonctionnel n'a pas besoin de comprendre une portion thermofusible, il est maintenu par la ou les portion(s) thermofusible(s) d'au moins l'une des première et seconde parties tubulaires tricotées.

Dans une variante, le procédé comprend une étape de disposition d'au moins un composant fonctionnel, choisi parmi le ou les composant(s) fonctionnel(s), contre une surface intérieure ou une surface extérieure de la première partie tubulaire tricotée.

Dans une variante, la première partie tubulaire tricotée forme une couche externe de la tige et la seconde partie tubulaire tricotée forme une couche interne de la tige.

Bien sûr, selon les besoins, cette disposition peut être inversée. La première partie tubulaire tricotée forme une couche interne de la tige et la seconde partie tubulaire tricotée forme une couche externe de la tige.

Dans une variante, la première partie tubulaire tricotée comprend un ou plusieurs fils au moins en partie thermofusible(s), le rapport de la masse du ou des fil(s) au moins en partie thermofusible(s) sur la masse totale de la première partie tubulaire tricotée, est supérieur ou égal à 20%, de préférence supérieur ou égal à 40%, encore de préférence supérieur ou égal à 60%, notamment supérieur ou égal à 80%.

Dans une variante, la seconde partie tubulaire tricotée comprend un ou plusieurs fil(s) thermofusible(s), le rapport de la masse du ou des fil(s) au moins en partie thermofusible(s) sur la masse totale de la seconde partie tubulaire tricotée, est inférieur ou égal à 80%, de préférence inférieur ou égal à 60%, encore de préférence est inférieur ou égal à 40%, notamment inférieur ou égal à 20%.

Dans une variante, la première partie tubulaire tricotée comprend une zone d'ouverture d'introduction du pied et la seconde partie tubulaire tricotée comprend une zone d'ouverture d'introduction du pied, lesdites zones d'introduction d'ouverture du pied sont superposées. Dans une variante, le ou les fil(s) au moins partiellement thermofusible(s) forme(nt) au moins l'une desdites au moins une portion thermofusible choisie parmi : ladite au moins une portion thermofusible de la première partie tubulaire tricotée et ladite au moins une portion thermofusible de la seconde partie tubulaire tricotée, ou une combinaison de ces derniers. Dans une variante, la tige obtenue à l'étape (iii) comprend une partie de semelle, et le procédé comprend la solidarisation d'au moins un élément de semelle choisie parmi une semelle intermédiaire, et une semelle d'usure à ladite partie de semelle.

### Brève description des dessins

L'invention sera mieux comprise à la lecture de la description de deux modes de réalisation du procédé de fabrication selon l'invention mettant en œuvre dans chaque mode une préforme comprenant des perforations, donnés à titre d'exemple non limitatif, en référence aux dessins annexés, sur lesquels :
[Fig. 1] la figure **1** illustre un premier exemple de composant tubulaire tricoté comprenant des première et seconde parties tubulaires tricotées;
[Fig. 2] la figure **2** illustre un premier exemple d'ensemble chaussant disposé sur une préforme à la forme d'un pied comprenant le premier exemple de composant tubulaire tricoté représenté à la figure 1, en coupe longitudinale;
[Fig. 3] la figure **3** représente l'ensemble chaussant de la figure 2 disposé sur une préforme placé dans un volume de moulage pour la réalisation de l'étape de transformation (iii);
[Fig. 4] la figure **4** illustre une premier exemple de tige obtenue après l'étape (iii) de transformation, en coupe longitudinale;
[Fig. 5] la figure **5** illustre un exemple d'article chaussant comprenant une tige obtenue à l'issue de l'étape de transformation (iii);
[Fig. 6] la figure **6** illustre une variante du premier composant tubulaire tricoté représenté à la figure 1 dans laquelle seule la première partie tubulaire tricotée est représentée vue de dessous;
[Fig. 7] la figure **7** illustre la première partie tubulaire tricotée mise à plat sur un support vue de dessus;
[Fig. 8] la figure **8** illustre la première partie tubulaire tricotée mise à plat sur un support vue de dessous;
[Fig. 9] la figure **9** illustre la partie de semelle de la première partie tubulaire tricotée après fermeture de l'ouverture longitudinale de mise à plat; et
[Fig. 10] la figure **10** illustre l'ensemble chaussant des figures 6 à 9 disposé sur la surface extérieure d'une préforme, en coupe longitudinale.

### Description des modes de réalisation

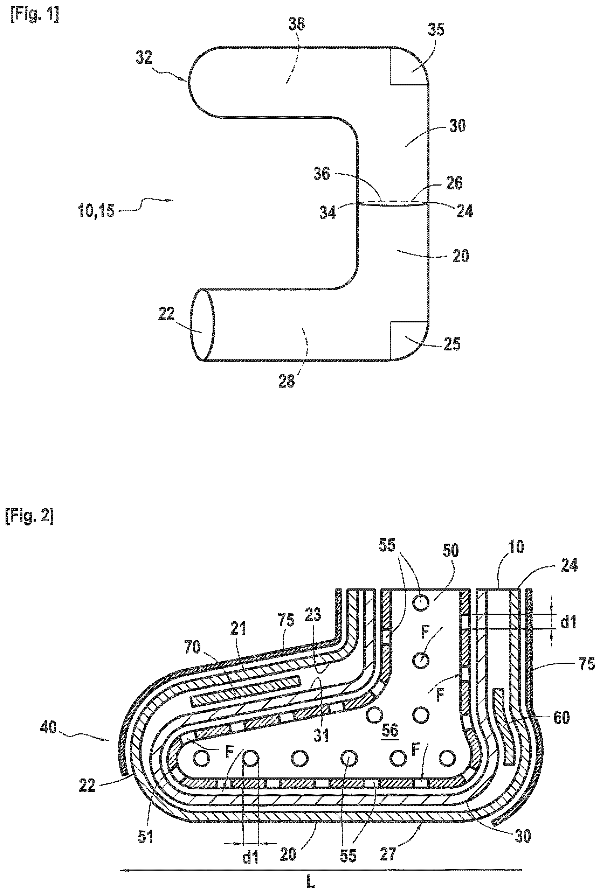

La figure 1 représente un premier exemple de composant tubulaire tricotée 10 en une seule pièce 15, comprenant une première partie tubulaire tricotée 20 et une seconde partie tubulaire tricotée 30, dont chacune est coudée. Le composant tubulaire tricotée 10 a ainsi sensiblement une forme en U. Les première et seconde pièces tubulaires tricotées 20,30 sont de construction tricotée unitaire avec le composant tubulaire tricotée 10. La première partie tubulaire tricotée 20 comprend une extrémité distale ouverte 22, qui sera de préférence fermée par couture avant la disposition sur la préforme, et une extrémité proximale ouverte 24 délimitant une zone d'introduction du pied 26 ainsi qu'un volume d'accueil 28 du pied. La seconde partie tubulaire tricotée 30 comprend une extrémité distale 32 fermée lors du tricotage du composant tubulaire 10, et une extrémité proximale 34 ouverte délimitant une zone d'introduction du pied 36 ainsi qu'un volume d'accueil 38 du pied. De préférence, les première et seconde parties tubulaires tricotées 20,30 comprennent des zones de talon respectives 25,35 destinées à recevoir le talon du pied de l'utilisateur. Il est déterminée, lors de la programmation du métier à tricoter pour tricoter le composant tubulaire tricotée 10, le zonage des première et seconde parties tubulaires tricotées 20,30 selon différents schémas de mailles (jersey envers, jersey endroit, mailles côtelées, ...) et différents types de fils (de par leur nature et/ou leur couleur et/ou leur transparence et/ou leur titre (dtex)). Il est ainsi possible de faire varier le relief, l'épaisseur, l'esthétisme, et la fonctionnalité de la ou des zones déterminée(s), et ce pour la première partie tubulaire tricotée 20 et la seconde partie tubulaire tricotée 30, indépendamment l'une de l'autre.

De manière alternative, une seule des première et seconde parties tubulaires 20 et 30 peut comprendre une portion coudée en sorte que le composant tubulaire 10 a une forme générale en L.

La première partie tubulaire tricotée 20 comprend des fils au moins en partie thermofusibles disposés dans une ou plusieurs portions. La seconde partie tubulaire tricotée 30 peut comprendre également une ou plusieurs portions thermofusible(s) formées de fils au moins en partie thermofusibles. Les fils au moins en partie thermofusibles représentent, par exemple au moins 30% en masse, et au plus 60% en masse, de la masse totale de la première partie tubulaire tricotée, et sont répartis sur l'intégralité de cette dernière. De manière alternative, la première enveloppe tricotée 20 est constituée de fils thermofusibles.

Les fils au moins en partie thermofusibles représentent, par exemple au moins 50% en masse, et au plus 80% en masse, de la masse totale de la seconde partie tubulaire tricotée, et sont répartis sur l'intégralité de cette dernière. Cette disposition peut bien sur varier selon la stabilité, et la souplesse recherchées.

La figure 2 représente un premier exemple d'ensemble chaussant 40 placé sur une préforme 50 à la forme d'un pied. La préforme comprend des perforations 55 réparties sur l'intégralité de la surface extérieure 51 de la préforme 50 de sorte que les parties de semelle, latérale, médiale, avant dans le prolongement des parties médiale, latérale et de semelle, et arrière dans le prolongement des parties médiale, latérale et de semelle, comprennent chacune des perforations 55. La préforme 50 comprend un volume intérieure 56, les perforations débouchant sur sa surface extérieure 51, ledit volume intérieur 56 et les perforations 55 étant en liaison fluidique. Les perforations 55 sont sensiblement circulaires, et ont un diamètre d1 de l'ordre de 8-10 mm. Le rapport de la somme des surfaces (cm²) des perforations 55 par rapport à la surface totale (cm²) de la surface extérieure 51 de la préforme 50 est de l'ordre de 15%.

L'ensemble chaussant 40 comprend le composant tubulaire tricoté 10 représenté à la figure 1. La seconde partie tubulaire 30 est disposé dans le volume d'accueil du pied 28 de la première partie tubulaire 20 en sorte que les première et seconde parties tubulaires 20 et 30 soient superposées.

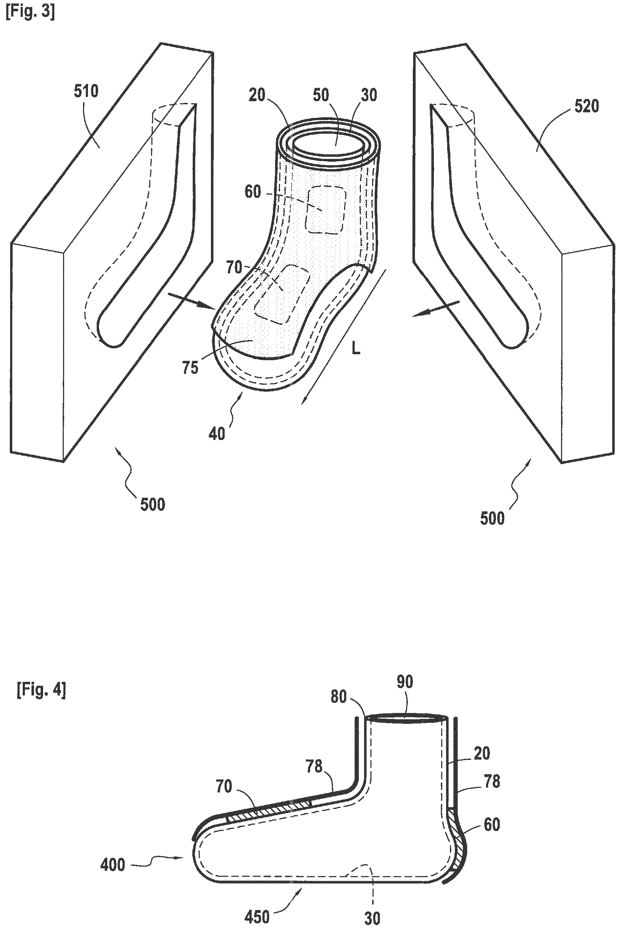

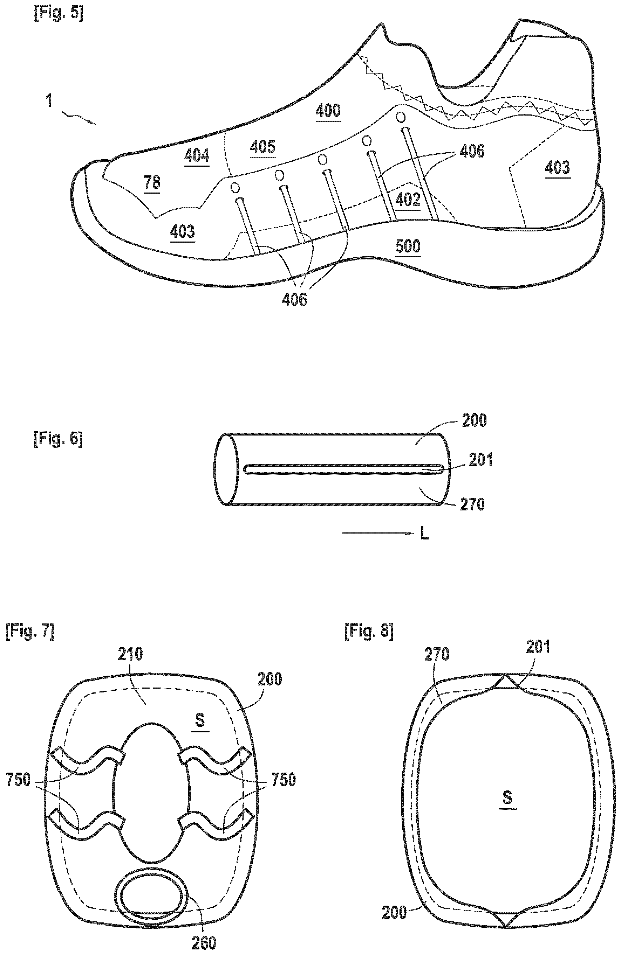

L'ensemble chaussant 40 comprend également un composant fonctionnel 60 qui est un renfort de talon et un composant fonctionnel 70 qui est un élément amortissant de cou-de-pied. Les composants fonctionnels 60 et 70 sont disposés entre les première et seconde parties tubulaires tricotées 20 et 30, respectivement entre les parties d'avant pied et les parties d'arrière pied au niveau du talon. Le composant fonctionnel 60 s'étend à la verticale de l'axe longitudinale L. Les parties tubulaires tricotées 20 et 30 forment ainsi, respectivement, une couche externe 80 et une couche interne 90 de la tige 400 obtenue après l'étape de transformation (iii) et représentée à la figure 6. L'ensemble chaussant 40 comprend également un composant fonctionnel 75 qui est un film polymérique, par exemple en polyuréthane thermofusible, et dont les dimensions sont déterminées en sorte de recouvrir au moins 50% de la surface extérieure 21, en particulier toute la surface extérieure 21, de la première partie tubulaire tricotée 20, à l'exception de la partie de semelle 27. L'étape de formation (ii) de l'ensemble chaussant 40 peut être effectuée une fois le composant tubulaire 10 placé sur la préforme 50 ou avant la disposition du composant tubulaire 10 sur la préforme 50. Avantageusement, tout le volume des première et seconde parties tubulaires tricotées 20,30 est accessible pour leur fonctionnalisation. Si besoin, il est possible d'utiliser un moyen de collage ou de soudure, notamment thermique, ou encore de couture, en particulier sous forme d'un ou plusieurs point(s), pour maintenir le ou les composant(s) fonctionnel(s) dans leur(s) position(s) de fonctionnalisation sur la première partie tubulaire tricotée et/ou la seconde partie tubulaire tricotée. L'ensemble chaussant 40 de la figure 2 placé sur la préforme 50 est alors disposé dans un volume de moulage défini entre un moule externe 500 en deux parties 510,520 représenté à la figure 3 et la préforme 50. Les parties 510 et 520 délimitent un volume en forme de pied complémentaire de la forme de pied de la préforme 50. De manière alternative, le volume de moulage peut être également délimité entre la surface extérieure de la préforme 50 et une membrane flexible étanche, comprenant une forme creuse sensiblement de pied venant épousant l'ensemble chaussant disposé sur la préforme 50.

L'ensemble chaussant 40 peut alors subir une étape de transformation (iii) pour l'obtention d'une tige 400 comprenant le thermoformage de l'ensemble chaussant 40 selon la forme de pied de la préforme 50, et la solidarisation, des composant fonctionnels 60,70 aux première et seconde parties tubulaires tricotées 20,30, du composant fonctionnel 75 à la première partie tubulaire tricotée 20, et des première et seconde parties tubulaires tricotées 20 et 30 entre-elles au moins en partie. En particulier, la surface interne 23 de la première partie tubulaire tricotée est disposée directement contre la surface externe 31 de la seconde partie tubulaire tricotée 30. Le thermoformage et la solidarisation ont lieu en une seule étape, et donc simultanément. On applique ainsi à l'ensemble chaussant 40 de la chaleur, de la vapeur d'eau et une mise sous-vide en sorte de plaquer l'ensemble chaussant 40, donc y compris les composants fonctionnels 60,70 et 75 contre la surface extérieure 51 de la préforme 50. La vapeur d'eau, et donc de la chaleur, sont diffusées du volume intérieur 56 de la préforme 50 à travers les perforations 55 selon les flèches F vers l'ensemble chaussant 40. Les perforations 55 permettent de répartir de manière plus régulière la chaleur, et la vapeur d'eau, sur la surface extérieure 51 de la préforme, et ainsi d'obtenir une tige thermoformée 400 ayant une forme plus régulière, et de renforcer la solidarisation des composants fonctionnels 60 ,70 et 75 avec les première et seconde parties tubulaires tricotées 20 et 30, et la solidarisation des première et seconde parties tubulaires tricotées 20 et 30 entre-elles.

La mise sous vide du volume de moulage permet de plaquer l'ensemble chaussant 40 contre la surface extérieure 51, en particulier le composant fonctionnel 75 épousant ainsi parfaitement la surface extérieure 21 de la première partie tubulaire tricotée 20. L'air est également chassé de l'ensemble chaussant 40, améliorant ainsi la solidarisation et l'aspect du revêtement fonctionnel 75, et de la tige 400 de manière générale.

Le composant fonctionnel 75 étant thermofusible, il est solidarisé à la surface extérieure 21 de la première partie tubulaire 20. Les composants fonctionnels 60 et 75 adhèrent aux première et seconde parties tubulaires 20 et 30 par l'intermédiaire des portions thermofusibles qu'elles comprennent et/ou au moyen de portions thermofusibles supportées par les composants fonctionnels 60 et 75 eux-mêmes, et/ou à l'aide de moyen(s) adhésif(s), éventuellement thermofusible(s).

La tige 400 représentée à la figure 4 comprend les composants fonctionnels 60, 70 et 75 parfaitement intégrés, solidarisés et mis en forme à la forme du pied de la préforme 50. Il est ainsi possible de fonctionnaliser l'intégralité des surfaces extérieures ou intérieures des première et seconde parties tubulaires 20 et 30, sans limitation de la taille des composants fonctionnels. Par ailleurs, la solidarisation des composants fonctionnels et le thermoformage de l'ensemble chaussant 10 ayant lieu en même temps, les composants fonctionnels ne sont pas dégradés thermiquement.

La partie de semelle 450 de la tige 400 est ensuite solidarisée à un élément de semelle 500 pour l'obtention de l'article chaussant 1 représenté à la figure 5. La tige 400 peut ainsi comprendre différents zones tricotées 401 à 406 pour la première partie tubulaire tricotée 20 qui apparaissent sous le revêtement 78 transparent issu de la transformation du film 75. Les zones 401 à 406 différent de par leurs schémas de mailles, leurs couleurs, leurs élasticités, ou leurs rigidités. Les zones 406 correspondent ainsi à des éléments de renfort unidirectionnels tricotés renforçant les parties médiale et latérale de la tige 400.

La figure 6 représente une variante du composant tubulaire tricoté 10 représenté à la figure 1 dans laquelle la partie de semelle 270 de la première partie tubulaire tricoté 200 comprend une ouverture longitudinale 201 permettant la mise à plat de la première partie tubulaire tricotée 200 pour sa fonctionnalisation. Cette disposition implique un procédé de fabrication différent du procédé décrit pour la mise en œuvre du premier composant tubulaire 10. Seule la première partie tubulaire tricotée 200, vue de dessous, est représentée à la figure 6. La mise en œuvre du composant tubulaire tricoté 100 et son procédé de mise en œuvre seront décrit uniquement de par leurs différences avec le composant 10 et son procédé décrits en référence aux figures 1 à 5.

Le composant tubulaire tricoté 100 comprend également une seconde partie tubulaire tricotée 300 dans le prolongement de la première partie tubulaire tricotée 200 au niveau de leurs ouvertures d'introduction de pied respectivement 260,360.

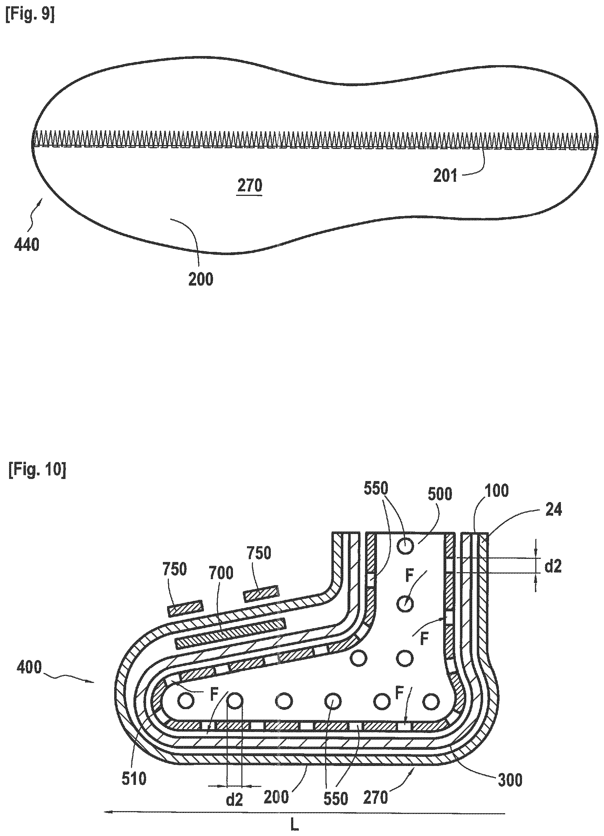

L'ouverture longitudinale 201, formée dans le sens longitudinale L de la première partie tubulaire tricotée 200 permet de mettre à plat la première partie tubulaire 200 sur un support S tel que représenté à la figure 7 vue de dessus pour la fonctionnalisation, ici de la face externe 210 des parties d'avant-pied, médial et latérale de la première partie tubulaire tricotée 200. L'ouverture longitudinale peut être effectuée par découpe dans la partie de semelle 270. Quatre composants fonctionnels 750 sont solidarisés à la face externe 201, par exemple par une couture ou à l'aide d'un agent adhésif. La figure 8 représente la première partie tubulaire tricotée 200 sur le support S vue de dessous. Les composants fonctionnels 750 sont cités à titre non limitatif à des fins d'illustration, d'autres composants fonctionnels pourraient être mis en œuvre et selon des régions différentes sur la face externe et/ou la face interne de la première partie tubulaire tricotée 200. Ainsi, tels que représentés sur la figure 10, le composant 700 similaire au composant 70 de par sa composition et son emplacement, est disposé entre les première et seconde parties tubulaires 200 et 300. La taille et l'emplacement retenu pour les composants fonctionnels sont cependant limités à la surface disponible plane représentée à la figure 8. La seconde partie tubulaire tricotée 300 n'est pas représentée pour des raisons de simplification sur les figures 7 et 8.

L'ouverture longitudinale 201 de la partie de semelle 270 de la première partie tubulaire tricotée 200 est ensuite fermée, notamment à l'aide d'une couture afin de remettre en volume l'ensemble chaussant 440 puis l'ensemble chaussant 440 est placé sur une préforme 500 tel que représenté à la figure 10 afin de subir une étape de transformation (iii) au-cours de laquelle la préforme 500 revêtue de l'ensemble chaussant 440 est placé dans un volume de moulage défini par un moule, de manière similaire au volume de moulage et au moule représentés à la figure 3. On applique alors à l'ensemble chaussant 440 de la chaleur, notamment combinée avec de la vapeur d'eau. La chaleur, et éventuellement la vapeur d'eau, est/sont injectée(s) à partir du volume intérieur de la préforme 500 à travers les perforations 550 permettant ainsi une meilleur distribution de la chaleur, et éventuellement de la vapeur d'eau sur et à travers l'ensemble chaussant 440.

L'ouverture de mise à plat de la première partie tubulaire tricotée peut avoir une forme différente de l'ouverture longitudinale 201, elle peut être par exemple moins longue, ou en forme de croix, ou transversale. Le principe étant qu'une ouverture de mise à plat soit traversante et formée dans la partie de semelle de la première partie tubulaire tricotée afin de faciliter sa mise à plat pour sa fonctionnalisation.

## Revendications

1. Procédé de fabrication d'un article chaussant (1) **caractérisé en ce qu'**il comprend les étapes:
(i)- fournir une première partie tubulaire tricotée (20 ;200) comprenant au moins une portion thermofusible et un ou plusieurs composant(s) fonctionnel(s) (60;70;75;700;750);
(ii)- former un ensemble chaussant (40;440) comprenant la première partie tubulaire tricoté, et un ou plusieurs composant(s) fonctionnel(s) (60;70;75;700;750);
(iii)- transformer l'ensemble chaussant (40;440) , placé au préalable contre la surface extérieure d'une préforme (50;500) à la forme d'un pied, en une tige (400), l'étape de transformation comprend le thermoformage de l'ensemble chaussant (40;440) selon la forme de pied de la préforme (50;500), et **en ce que** la préforme (50 ;500) comprend un volume intérieur (56) et des perforations (55 ;550) débouchant sur sa surface extérieure (51), ledit volume intérieur (56) et les perforations (55 ;550) sont en liaison fluidique.

2. Procédé de fabrication selon la revendication 1, **caractérisé en ce que** un flux de gaz(s), notamment de la vapeur d'eau, est envoyé(e) sur l'ensemble chaussant (40;440) à travers les perforations (55;550) de la préforme (50;500).

3. Procédé de fabrication selon l'une ou l'autre des revendications 1 et 2, **caractérisé en ce que** la surface extérieure (51) de la préforme (50 ;500) comprend au moins un métal.

4. Procédé selon l'une quelconque des revendications 1 à 3, **caractérisé en ce que** lors de l'étape (iii) de transformation, on applique, en une seule étape, à l'ensemble chaussant (40;440), de la chaleur et/ou un flux de gaz(s), notamment de la vapeur d'eau, et/ou une mise sous vide.

5. Procédé de fabrication selon l'une quelconque des revendications 1 à 4, **caractérisé en ce qu'**il comprend la fourniture d'une seconde partie tubulaire tricotée (30;300), comprenant éventuellement au moins une portion thermofusible, et **en ce que** l'ensemble chaussant (40 ;440) à l'étape (ii) comprend les première et seconde parties tubulaires tricotées (20;30;200;300), au moins en partie, superposées, en liaison avec un ou plusieurs composant(s) fonctionnel(s) (60;70;75;700 750).

6. Procédé selon la revendication 5, **caractérisé en ce que** l'étape de transformation (iii) comprend la solidarisation, au moins partielle, d'une part du ou des composant fonctionnel(s) (60 ;70 ;75 ;700 ;750) à au moins l'une, de la première partie tubulaire tricotée (20 ;200) et de la seconde partie tubulaire tricotée (30 ;300), et d'autre part des première et seconde parties tubulaires tricotées entre-elles (20;30;200;300), le thermoformage et la solidarisation ont lieu en une seule étape.

7. Procédé de fabrication selon l'une ou l'autre des revendications 5 et 6, **caractérisé en ce qu'**il comprend la fourniture d'un composant tubulaire tricotée (10 ;100), et **en ce que** la première partie tubulaire tricotée (20;200) et la seconde partie tubulaire tricotée (30 ;300) sont de construction tricotée unitaire avec le composant tubulaire tricotée (10 ;100 ) en sorte de former un élément en une pièce tricotée (15 ).

8. Procédé de fabrication selon l'une quelconque des revendications 5 à 7, **caractérisé en ce qu'**il comprend une étape de disposition d'au moins un composant fonctionnel (60;70;700) entre la première partie tubulaire tricotée (20;200) et la seconde partie tubulaire tricotée (30;300).

9. Procédé de fabrication selon l'une quelconque des revendications 5 à 8, **caractérisé en ce que** la première partie tubulaire tricotée (20;200) forme une couche externe (80) de la tige (400) et la seconde partie tubulaire tricotée (30;300) forme une couche interne (90) de la tige (400).

10. Procédé de fabrication selon l'une quelconque des revendications 5 à 9, **caractérisé en ce que** la première partie tubulaire tricotée (20 ;200) comprend une zone d'ouverture d'introduction du pied (26) et la seconde partie tubulaire tricotée (30 ;300) comprend une zone d'ouverture d'introduction du pied (36), lesdites zones d'introduction d'ouverture du pied (26,36) sont superposées.

11. Procédé de fabrication selon l'une quelconque des revendications 5 à 10, **caractérisé en ce que** la seconde partie tubulaire tricotée (30;300) comprend une ou plusieurs fil(s) thermofusible(s), le rapport de la masse du ou des fil(s) au moins en partie thermofusible(s) sur la masse totale de la seconde partie tubulaire tricotée (30;300), est inférieur ou égal à 80%, de préférence inférieur ou égal à 60%, encore de préférence est inférieur ou égal à 40%, notamment inférieur ou égal à 20%.

12. Procédé de fabrication selon l'une quelconque des revendications 1 à 11, **caractérisé en ce que** la première partie tubulaire tricotée (20;200) comprend un ou plusieurs fil(s) au moins en partie thermofusible(s), le rapport de la masse du ou des fil(s) au moins en partie thermofusible(s) sur la masse totale de la première partie tubulaire tricotée (20;200), est supérieur ou égal à 20%, de préférence supérieur ou égal à 40%, encore de préférence supérieur ou égal à 60%, notamment supérieur ou égal à 80%.

13. Procédé de fabrication selon l'une quelconque des revendications 1 à 12, **caractérisé en ce qu'**un composant fonctionnel (75), choisi parmi le ou les composant(s) fonctionnel(s) (60;70;75;700;750), est un film comprenant au moins un matériau thermofusible.

14. Procédé de fabrication selon la revendication 13, **caractérisé en ce que** après l'étape (iii), ledit film (75) forme un revêtement (78) recouvrant au moins 10%, de préférence au moins 50%, de la surface extérieure de la tige.

15. Procédé de fabrication selon l'une quelconque des revendications 1 à 14, **caractérisé en ce qu'**au moins un composant fonctionnel (60;70;75;700;750), parmi le ou les composant(s) fonctionnel(s), est choisi parmi : un film polymérique comprenant au moins un matériau thermofusible, un élément de fonctionnalisation textile, une empeigne, un élément de renfort de talon, un logo, un élément esthétique, un bout dur, un élément de renfort d'une zone de laçage, un élément amortissant, une partie tubulaire tricotée auxiliaire, ou une combinaison de ces derniers.

16. Procédé de fabrication selon l'une quelconque des revendications 1 à 15, **caractérisé en ce qu'**il comprend une étape de disposition d'au moins un composant fonctionnel (60;70;75;700;750), choisi parmi le ou les composant(s) fonctionnel(s), contre une surface intérieure ou une surface extérieure de la première partie tubulaire tricotée (20;200).

17. Procédé de fabrication selon l'une quelconque des revendications 1 à 16, **caractérisé en ce que** la tige (400) obtenue à l'étape (iii) comprend une partie de semelle, et **en ce qu'**il comprend la solidarisation d'au moins un élément de semelle (500) choisi parmi une semelle intermédiaire, et une semelle d'usure à ladite partie de semelle.

## Patentansprüche

1. Herstellungsverfahren eines Schuhwerks (1), **dadurch gekennzeichnet, dass** es die folgenden Schritte umfasst:
(i) Bereitstellen eines ersten gestrickten schlauchförmigen Teils (20; 200), umfassend mindestens einen wärmeschmelzbaren Abschnitt und eine oder mehrere funktionelle Komponenten (60; 70; 75; 700; 750);
(ii) Bilden einer Schuhanordnung (40; 440), umfassend den ersten gestrickten schlauchförmigen Teil und eine oder mehrere funktionelle Komponenten (60; 70; 75; 700; 750),
(iii) Verarbeiten der Schuhanordnung (40; 440), die zuvor gegen die Außenfläche eines fußförmigen Vorformlings (50; 500) gelegt wurde, in einen Schaft (400), wobei der Verarbeitungsschritt das Wärmeverformen der Schuhanordnung (40; 440) gemäß der Fußform des Vorformlings (50; 500) umfasst, und dass der Vorformling (50; 500) ein Innenvolumen (56) und Perforationen (55; 550), die an seiner Außenfläche (51) münden, umfasst, wobei das Innenvolumen (56) und die Perforationen (55; 550) in Fluidverbindung sind.

2. Herstellungsverfahren nach Anspruch 1, **dadurch gekennzeichnet, dass** ein Strom von Gas(en), insbesondere Wasserdampf, durch die Perforationen (55; 550) des Vorformlings (50; 500) auf die Schuhanordnung (40; 440) geleitet wird.

3. Herstellungsverfahren nach einem der Ansprüche 1 oder 2, **dadurch gekennzeichnet, dass** die Außenfläche (51) des Vorformlings (50; 500) mindestens ein Metall umfasst.

4. Verfahren nach einem der Ansprüche 1 bis 3, **dadurch gekennzeichnet, dass** während des Schritts (iii) eines Verarbeitens in einem einzigen Schritt Wärme und/oder ein Gasstrom, insbesondere Wasserdampf, und/oder ein Vakuum auf die Schuhanordnung (40; 440) angewendet wird.

5. Herstellungsverfahren nach einem der Ansprüche 1 bis 4, **dadurch gekennzeichnet, dass** es das Bereitstellen eines zweiten gestrickten schlauchförmigen Teils (30; 300) umfasst, optional umfassend mindestens einen wärmeschmelzbaren Abschnitt, und dass die Schuhanordnung (40; 440) in Schritt (ii) den ersten und den zweiten gestrickten schlauchförmigen Teil (20; 30; 200; 300) umfasst, die in Verbindung mit einer oder mehreren funktionellen Komponenten (60; 70; 75; 700; 750) zumindest teilweise übereinander liegen.

6. Verfahren nach Anspruch 5, **dadurch gekennzeichnet, dass** der Verarbeitungsschritt (iii) das zumindest teilweise Verbinden einerseits der funktionellen Komponente(n) (60; 70; 75; 700; 750) mit mindestens einem der ersten gestrickten schlauchförmigen Teile (20, 200) und dem zweiten gestrickten schlauchförmigen Teil (30; 300) und andererseits des ersten und des zweiten gestrickten schlauchförmigen Teils (20; 30; 200; 300) untereinander umfasst, wobei das Wärmeverformen und das Verbinden in einem einzigen Schritt erfolgen.

7. Herstellungsverfahren nach einem der Ansprüche 5 oder 6, **dadurch gekennzeichnet, dass** es das Bereitstellen einer gestrickten schlauchförmigen Komponente (10; 100) umfasst, und dass der erste gestrickte schlauchförmige Teil (20; 200) und der zweite gestrickte schlauchförmige Teil (30; 300) eine einheitliche gestrickte Konstruktion mit der gestrickten schlauchförmigen Komponente (10; 100) sind, um ein einstückiges gestricktes Element (15) zu bilden.

8. Herstellungsverfahren nach einem der Ansprüche 5 bis 7, **dadurch gekennzeichnet, dass** es einen Schritt eines Anordnens mindestens einer funktionellen Komponente (60; 70; 700) zwischen dem ersten gestrickten schlauchförmigen Teil (20; 200) und dem zweiten gestrickten schlauchförmigen Teil (30; 300) umfasst.

9. Herstellungsverfahren nach einem der Ansprüche 5 bis 8, **dadurch gekennzeichnet, dass** der erste gestrickte schlauchförmige Teil (20; 200) eine äußere Schicht (80) des Schafts (400) bildet und der zweite gestrickte schlauchförmige Teil (30; 300) eine innere Schicht (90) des Schafts (400) bildet.

10. Herstellungsverfahren nach einem der Ansprüche 5 bis 9, **dadurch gekennzeichnet, dass** der erste gestrickte schlauchförmige Teil (20; 200) einen Fußeinführungsöffnungsbereich (26) umfasst und der zweite gestrickte schlauchförmige Teil (30; 300) einen Fußeinführungsöffnungsbereich (36) umfasst, wobei die Fußeinführungsöffnungsbereiche (26, 36) überlagert sind.

11. Herstellungsverfahren nach einem der Ansprüche 5 bis 10, **dadurch gekennzeichnet, dass** der zweite gestrickte schlauchförmige Teil (30; 300) ein oder mehrere wärmeschmelzbare Fäden umfasst, wobei das Verhältnis der Masse des oder der Fäden, die zumindest teilweise wärmeschmelzbare Fäden sind, zu der Gesamtmasse des zweiten gestrickten schlauchförmigen Teils (30; 300) kleiner als oder gleich wie 80 %, vorzugsweise kleiner als oder gleich wie 60 %, bevorzugter kleiner als oder gleich wie 40 %, insbesondere kleiner als oder gleich wie 20 % ist.

12. Herstellungsverfahren nach einem der Ansprüche 1 bis 11, **dadurch gekennzeichnet, dass** der erste gestrickte schlauchförmige Teil (20; 200) einen oder mehrere zumindest teilweise wärmeschmelzbare Fäden umfasst, wobei das Verhältnis der Masse des oder der zumindest teilweise wärmeschmelzbaren Fäden zu der Gesamtmasse des ersten gestrickten schlauchförmigen Teils (20; 200) größer als oder gleich wie 20 %, vorzugsweise größer als oder gleich wie 40 %, bevorzugter größer als oder gleich wie 60 %, insbesondere größer als oder gleich wie 80 %, ist.

13. Herstellungsverfahren nach einem der Ansprüche 1 bis 12, **dadurch gekennzeichnet, dass** eine funktionelle Komponente (75), die ausgewählt ist aus der/den funktionellen Komponente(n) (60; 70; 75; 700; 750), ein Film ist, umfassend mindestens ein wärmeschmelzbares Material.

14. Herstellungsverfahren nach Anspruch 13, **dadurch gekennzeichnet, dass** nach Schritt (iii) der Film (75) eine Beschichtung (78) bildet, die mindestens 10 %, vorzugsweise mindestens 50 %, der Außenfläche des Schafts bedeckt.

15. Herstellungsverfahren nach einem der Ansprüche 1 bis 14, **dadurch gekennzeichnet, dass** mindestens eine funktionelle Komponente (60; 70; 75; 700; 750) von der/den funktionellen Komponente(n) ausgewählt ist aus: einem Polymerfilm, umfassend mindestens ein wärmeschmelzbares Material, einem textilen Funktionalisierungselement, einem Obermaterial, einem Fersenverstärkungselement, einem Logo, einem ästhetischen Element, einer harten Spitze, einem Verstärkungselement für einen Schnürbereich, einem Dämpfungselement, einem gestrickten schlauchförmigen Hilfsteil oder einer Kombination davon.

16. Herstellungsverfahren nach einem der Ansprüche 1 bis 15, **dadurch gekennzeichnet, dass** es einen Schritt eines Anordnens mindestens einer funktionellen Komponente (60; 70; 75; 700; 750), die ausgewählt ist aus der funktionellen Komponente oder den funktionellen Komponenten, gegen eine Innenfläche oder eine Außenfläche des ersten gestrickten schlauchförmigen Abschnitts (20; 200) umfasst.

17. Herstellungsverfahren nach einem der Ansprüche 1 bis 16, **dadurch gekennzeichnet, dass** der in Schritt (iii) erlangte Schaft (400) einen Sohlenteil umfasst, und dass es die feste Verbindung von mindestens einem Sohlenelement (500), das ausgewählt ist aus einer Zwischensohle und einer Verschleißsohle, mit dem Sohlenteil umfasst.

## Claims

1. A method for manufacturing a footwear article (1) **characterized in that** it comprises the steps of:
(i)- providing a first knitted tubular part (20;200) comprising at least one fusible portion, and one or more functional component(s) (60;70;75;700;750);
(ii)- forming a footwear assembly (40; 440) comprising the first knitted tubular part and one or more functional component(s) (60;70;75;700;750);
(iii)- transforming the footwear assembly (40; 440), previously disposed against the outer surface of a preform (50;500) having a foot shape, in an upper (400), the transforming step comprising thermoforming the footwear assembly (40; 440) to follow the foot shape of the preform (50; 500), and **in that** the preform (50; 500) comprises an inner volume (56) and perforations (55; 550) opening onto its outer surface (51), said inner volume (56) and the perforations (55; 550) are in fluid connection.

2. The manufacturing method as claimed in claim 1, **characterized in that** a flow of gas(es), particularly water vapor, is sent onto the footwear assembly (40; 440) through the perforations (55; 550) of the preform (50; 500).

3. The manufacturing method as claimed in one or the other of claims 1 and 2, **characterized in that** the outer surface (51) of the preform (50; 500) comprises at least one metal.

4. The method as claimed in any one of claims 1 to 3, **characterized in that** in the transforming step (iii), heat and/or a flow of gas(es), particularly water vapor, and/or placement under vacuum, is/are applied in a single step to the footwear assembly (40, 440).

5. The manufacturing method as claimed in any one of claims 1 to 4, **characterized in that** it comprises the providing of a second knitted tubular part (30;300), optionally comprising at least one fusible portion, and **in that** the footwear assembly (40; 440) in step (ii) comprises the first and second knitted tubular parts (20;30; 200;300), at least in part, superimposed, in connection with one or more functional component(s) (60;70;75;700;750).

6. The method as claimed in claim 5, **characterized in that** the transforming step (iii) comprises the at least partial securing of, on the one hand, the functional component(s) (60; 70; 75; 700; 750) to at least one of the first knitted tubular part (20; 200) and of the second knitted tubular part (30; 300) and, on the other hand, of the first and second knitted tubular parts (20;30; 200; 300) to one another, the thermoforming and securing take place in a single step.

7. The manufacturing method as claimed in one or the other of claims 5 and 6, **characterized in that** it comprises the providing of a knitted tubular component (10;100), and **in that** the first knitted tubular part (20;200) and the second knitted tubular part (30;300) are of unitary knitted construction with the knitted tubular component (10;100) such as to form an element made of a knitted piece (15).

8. The manufacturing method as claimed in any one of claims 5 to 7, **characterized in that** it comprises a step of disposing at least one functional component (60; 70; 700) between the first knitted tubular part (20; 200) and the second knitted tubular part (30; 300).

9. The manufacturing method as claimed in any one of claims 5 to 8, **characterized in that** the first knitted tubular part (20; 200) forms an outer layer (80) of the upper (400) and the second knitted tubular part (30; 300) forms an inner layer (90) of the upper (400).

10. The manufacturing method as claimed in any one of claims 5 to 9, **characterized in that** the first knitted tubular part (20; 200) comprises an opening area for insertion of the foot (26) and the second knitted tubular part (30; 300) comprises an opening area for insertion of the foot (36), said foot insertion opening areas (26,36) are superimposed.

11. The manufacturing method as claimed in any one of claims 5 to 10, **characterized in that** the second knitted tubular part (30; 300) comprises one or more at least partly fusible yarn(s), the ratio of the weight of the at least partly fusible yarn(s) to the total weight of the second knitted tubular part (30; 300), is less than or equal to 80%, preferably less than or equal to 60%, still preferably less than or equal to 40%, particularly less than or equal to 20%.

12. The manufacturing method as claimed in any one of claims 1 to 11, **characterized in that** the first knitted tubular part (20; 200) comprises one or more at least partly fusible yarn(s), the ratio of the weight of the at least partly fusible yarn(s) to the total weight of the first knitted tubular part, is greater than or equal to 20%, preferably greater than or equal to 40%, still preferably greater than or equal to 60%, particularly greater than or equal to 80%.

13. The manufacturing method as claimed in any one of claims 1 to 12, **characterized in that** a functional component (75), chosen from the functional component(s) (60; 70;75;700;750), is a film comprising at least one fusible material.

14. The manufacturing method as claimed in claim 13, **characterized in that** after step (iii), said film (75) forms a coating (78) covering at least 10%, preferably at least 50%, of the outer surface of the upper (400).

15. The manufacturing method as claimed in any one of claims 1 to 14, **characterized in that** at least one functional component (60;70;75;700;750), from the functional component(s), is chosen from: a polymer film comprising at least one fusible material, a textile functionalization element, a vamp, a heel reinforcement element, a logo, an esthetic element, a hard cap, a reinforcement element of a lacing area, a shock-absorbing element, an auxiliary knitted tubular part, or a combination thereof.

16. The manufacturing method as claimed in any one of claims 1 to 15, **characterized in that** it comprises a step of disposing at least one functional component (60;70;75;700;750) chosen from the functional component(s), against an inner surface or an outer surface of the first knitted tubular part (20; 200).

17. The manufacturing method as claimed in any one of claims 1 to 16, **characterized in that** the upper (400) obtained in step (iii) comprises a sole part, and **in that** it comprises the securing of at least one sole element (500) chosen from a midsole and an outsole to said sole part.
